Europäisches Patentamt

European Patent Office

Office européen des brevets

(11) Veröffentlichungsnummer: **0 222 064 B1**

(12) **EUROPÄISCHE PATENTSCHRIFT**

(45) Veröffentlichungstag der Patentschrift: 06.03.91

(21) Anmeldenummer: 86110258.0

(22) Anmeldetag: 25.07.86

(51) Int. Cl.⁵: **B60R 1/06**

(54) **Fahrzeugspiegel.**

(30) Priorität: 09.11.85 DE 8531670 U

(43) Veröffentlichungstag der Anmeldung:
20.05.87 Patentblatt 87/21

(45) Bekanntmachung des Hinweises auf die
Patenterteilung:
06.03.91 Patentblatt 91/10

(84) Benannte Vertragsstaaten:
**BE DE FR GB IT NL**

(56) Entgegenhaltungen:
**DE-A- 3 234 157**
**DE-A- 3 421 423**
**DE-B- 1 275 392**
**DE-C- 2 822 681**
**DE-U- 8 210 515**

(73) Patentinhaber: **Hagus C. Luchtenberg GmbH &
Co. KG
Wiesenstrasse 8-10
W-5650 Solingen-Wald(DE)**

(72) Erfinder: **Luchtenberg, Curt
Sonnenschein 6
W-5650 Solingen - Wald(DE)**

(74) Vertreter: **Selting, Günther, Dipl.-Ing.
Deichmannhaus am Hauptbahnhof
W-5000 Köln 1(DE)**

## Beschreibung

Die Erfindung betrifft einen Fahrzeugspiegel mit einer im Spiegelgehäuse untergebrachten Antriebsvorrichtung zum Verstellen des Spiegelglases in bezug auf einen am Fahrzeug zu befestigenden Spiegelhalter.

Die bekannten Fahrzeugspiegel dieser Art weisen ein Spiegelgehäuse auf, das normalerweise am Fahrzeug fest angebracht ist und nur im Falle eines Stoßes durch Abklappen relativ zum Gehäuse bewegt werden kann. Im Spiegelgehäuse befindet sich ein durch eine Antriebsvorrichtung bewegbarer Spiegelglasträger. Zum Verstellen des Spiegelglases wird dieses in bezug auf das fahrzeugfeste Spiegelgehäuse bewegt. Derartige Spiegel haben den Nachteil, daß zwischen Spiegelglas und Spiegelgehäuse ein erheblicher Spalt besteht, durch den Schmutz in das Spiegelgehäuse eindringen kann. Außerdem ist es erforderlich, den Rand des Spiegelgehäuses relativ weit über das Spiegelglas vorzuziehen, so daß fahrzeugseitig ein Bereich des Spiegelglases besteht, der nicht eingesehen werden kann, und am entgegengesetzten Ende ein Bereich, in dem sich der Rand des Spiegelgehäuses spiegelt.

Ein Fahrzeugspiegel der im Oberbegriff des Patentanspruchs 1 angegebenen Art ist bekannt aus DE -C3-28 22 681 . Dieser Fahrzeugspiegel weist einen in das Innere des Spiegelgehäuses hineinragenden Spiegelhalter auf, an dem das Spiegelgehäuse über eine Kreuzgelenkanordnung gelagert ist. An dem Spiegelhalter sind zwei Elektromotore mit zugehörigen Getrieben angebracht. Diese Elektromotore sind so angeordnet, daß der Angriffspunkt des einen Motors am Spiegelgehäuse auf der vertikalen Schwenkachse des Spiegelgehäuses und der Angriffspunkt des anderen Motors auf der horizontalen Schwenkachse des Spiegelgehäuses liegt. Durch Betätigung des ersten Motors wird das Spiegelgehäuse um die horizontale Achse und durch Betätigung des zweiten Motors wird das Spiegelgehäuse um die vertikale Achse der Kreuzgelenkanordnung geschwenkt. Voraussetzung dafür, daß die beiden Motore an den genannten Positionen angeordnet werden können, ist, daß die Kreuzgelenkanordnung sich im wesentlichen in der Mitte des Spiegelgehäuses befindet. Das Spiegelgehäuses wird durch diese Positionierung der Kreuzgelenkanordnung und den seitlich davon angeordneten Motor sowie den vertikal davon angeordneten Motor relativ groß. Bei einer Spiegelverstellung um eine der beiden Achsen muß ein einziger Motor die gesamte Verstellkraft aufbringen.

Der Erfindung liegt die Aufgabe zugrunde, einen Fahrzeugaußenspiegel zu schaffen, bei dem die Motor-Getriebe-Einheiten nicht entlang der vertikalen und horizontalen Schwenkachsen angeordnet sind, so daß sich eine günstigere Bauform für den Spiegel und das Gehäuse ergibt.

Die Lösung dieser Aufgabe erfolgt erfindungsgemäß mit den im Patentanspruch 1 angegebenen Merkmalen.

Nach der Erfindung sind zwei Motore vorgesehen, deren Angriffspunkte am Spiegelgehäuse mit dem Kugelgelenk ein gleichschenkliges Dreieck mit im wesentlichen horizontaler oder vertikaler Symmetrieachse bilden. Die Motore sind zum Schwenken des Spiegelgehäuses um eine vertikale oder horizontale Achse herum wahlweise gegensinnig oder gleichsinnig antreibbar. Bei gleichsinnigem Antrieb erfolgt das Verschwenken des Spiegelgehäuses um eine Achse, die durch den Mittelpunkt des Kugelgelenks hindurchgeht, und parallel zu den Angriffspunkten der Antriebsvorrichtung am Spiegelgehäuse verläuft; bei gegensinnigem Antrieb erfolgt das Verschwenken des Spiegelgehäuses um eine Achse, die durch den Mittelpunkt des Kugelgehäuses und rechtwinklig zu der ersten Achse verläuft. Auf diese Weise kann der Spiegel sowohl Schwenkbewegungen (um eine vertikale Achse) als auch Nickbewegungen (um eine horizontale Achse) ausführen.

Im folgenden wird unter Bezugnahme auf die Zeichnungen ein Ausführungsbeispiel der Erfindung näher erläutert.

Es zeigen:

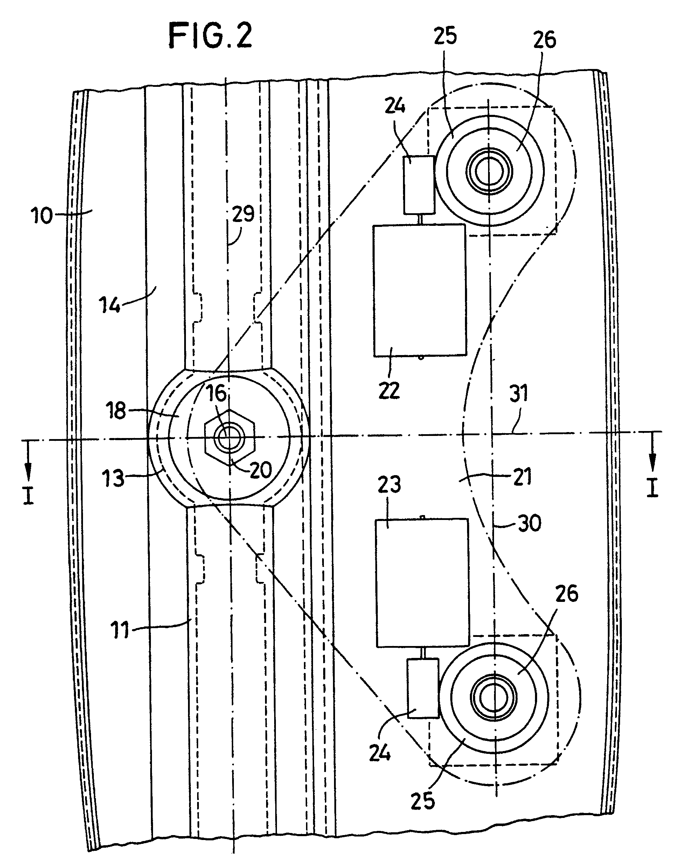

Fig. 1 einen Schnitt durch einen Fahrzeugspiegel entlang der Linie I-I von Fig. 2 und

Fig. 2 eine Ansicht des Spiegels der Fig. 1 aus Richtung des Pfeiles II bei abgenommenem Spiegelglas, wobei die Haltevorrichtung strichpunktiert angedeutet ist.

Der dargestellte Fahrzeugspiegel ist als Außenspiegel für Lastwagen oder Geländewagen bestimmt. Er weist ein muldenförmiges Spiegelgehäuse 10 auf, das an einem stabförmigen Spiegelträger 11 befestigt ist. Die rückwärtige (d.h. dem Spiegelglas 12 abgewandte) Gehäusewand ist zur Bildung einer in das Gehäuseinnere hinein vorstehenden Gelenkkugel 13 geformt. Die Mulde, die das Innere der Gelenkkugel 13 bildet, ist durch einen bündig mit der Außenseite des Gehäuses abschließenden Deckel 14 verschlossen. In das Innere der hohlen Gelenkkugel 13 ragt der Spiegelhalter 11 hinein. An dem Spiegelhalter 11 ist mit einer Klemmvorrichtung 15 ein in Richtung auf das Spiegelglas 12 abstehender Schaft 16 befestigt, der durch eine Öffnung 17 der Gelenkkugel 13 hindurchragt. Diese Öffnung hat gegenüber dem Durchmesser des Schaftes 16 ein erhebliches Übermaß, so daß die Gelenkkugel 13 relativ zu dem Schaft 16 verschwenkt werden kann.

Eine Kugelpfanne 18 mit einer Öffnung, durch die der Schaft 16 ebenfalls hindurchgeht, ist von außen gegen die Gelenkkugel 13 gelegt. Die Gelenkkugel 13 wird von einer den Schaft 16 koaxial umgebenden Schraubenfeder 19 gegen die Gelenkpfanne 18 gedrückt. Die Schraubenfeder ist an der auf ein Gewinde des Schaftes 16 aufgeschraubten Mutter 20 abgestützt.

Der Schaft 16 trägt außerdem die Haltevorrichtung 21, die im vorliegenden Fall aus einer starren Blechplatte besteht. Die Haltevorrichtung 21 ist über den Schaft 16 starr mit dem Spiegelträger 11 verbunden.

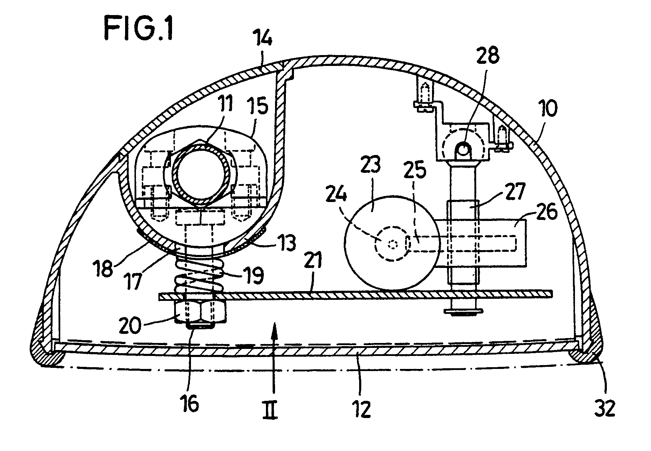

An der Rückseite der Haltevorrichtung 21 sind zwei Motore 22,23 mit parallel zur Haltevorrichtung 21 verlaufender Achse befestigt. Jeder Motor treibt über ein Zahnrad 24 ein Schneckenrad 25, das in einem an der Haltevorrichtung 21 befestigten Gehäuse 26 gelagert ist. Das Schneckenrad 25 weist ein Innengewinde auf, mit dem eine Gewindespindel 27 in Eingriff steht. Das rückwärtige Ende der Gewindespindel 27 ist über ein kardanisches Gelenk 28 mit der Rückwand des Gehäuses 10 verbunden. In der in Fig. 1 dargestellten neutralen Stellung des Spiegelgehäuses 10 verläuft die Gewindespindel 27 rechtwinklig zur Ebene der Haltevorrichtung 21. Das vordere Ende der Gewindespindel 27 ragt durch ein Loch in der Haltevorrichtung 21 hindurch.

Wenn beide Motore 22 und 23 gleichsinnig angetrieben werden, d.h. wenn die Gewindespindeln 27 die rückwärtige Gehäusewand in Richtung auf die Haltevorrichtung 21 ziehen oder sie von dieser fortdrücken, erfolgt eine Verschwenkung des Spiegelgehäuses um die vertikale Achse 29 herum, die durch den Mittelpunkt des Kugelgelenks 13,18 geht und parallel zu derjenigen Geraden 30 verläuft, die durch die Mittelpunkte der beiden Gelenke 28 hindurchgeht. Werden dagegen beide Motore 22,23 gegensinnig angetrieben, d.h. die beiden Gewindespindeln 27 führen entgegengesetzte Bewegungen aus, dann erfolgt die Verschwenkung des Spiegelgehäuses um die Achse 31 herum, die durch den Mittelpunkt des Kugelgelenks 13,18 geht und rechtwinklig zu der Geraden 30 verläuft.

Jedes Getriebe 25,27 enthält eine (nicht dargestellte) Überlastsicherung, um zu verhindern, daß der zugehörige Motor überlastet wird, wenn das Spiegelgehäuse blockiert.

Das Spiegelglas 12 ist in der Öffnung des Spiegelgehäuses 10 fest angebracht. Der am Rand des Spiegelgehäuses befestigte Dichtwulst 32 legt sich an den Rand des Spiegelglases an und dichtet den Spalt zwischen Spiegelglas und Gehäuse ab.

**Ansprüche**

1. Fahrzeugspiegel mit einer im Spiegelgehäuse untergebrachten Antriebsvorrichtung zum Verstellen des Spiegelgehäuses in bezug auf einen am Fahrzeug zu befestigenden Spiegelhalter, wobei die am Spiegelhalter (11) abgestützte Antriebsvorrichtung (22 bis 27) am Spiegelgehäuse (10) angreift, an dem das Spiegelglas (12) fest angebracht ist, und wobei das Spiegelgehäuse (10) gelenkig mit dem Spiegelhalter (11) verbunden ist und die Antriebsvorrichtung (22 bis 27) zwei Motore (22;23) aufweist, welche über je ein Getriebe (25,27) im Abstand von dem Gelenk an dem Spiegelgehäuse (10) angreifen, **dadurch gekennzeichnet,** daß das Gelenk ein Kugelgelenk (13,18) ist und daß die Angriffspunkte der beiden Motore (22,23) am Spiegelgehäuse (10) mit dem Kugelgelenk (13,18) ein gleichschenkliges Dreieck mit im wesentlichen horizontaler oder vertikaler Symmetrieachse (31) bilden.

2. Fahrzeugspiegel nach Anspruch 1, dadurch gekennzeichnet, daß die Motore (22,23) zum Schwenken des Spiegelgehäuses (10) um eine vertikale oder horizontale Achse (29,31) wahlweise gleichsinnig oder gegensinnig antreibbar sind.

3. Fahrzeugspiegel nach Anspruch 1 oder 2, dadurch gekennzeichnet, daß durch das Kugelgelenk (13,18) ein fest mit dem Spiegelhalter (11) verbundener Schaft (16) hindurchgeht, an dem eine die Antriebsvorrichtung (22 bis 27) tragende Haltevorrichtung (21) befestigt ist.

4. Fahrzeugspiegel nach einem der Ansprüche 1 bis 3, dadurch gekennzeichnet, daß jeder Motor (22,23) eine Spindel (27) antreibt, die über ein kardanisches Gelenk (28) mit der Rückwand des Spiegelgehäuses (10) verbunden ist.

**Claims**

1. A vehicle rear view mirror comprising a drive device accommodated in the mirror case, for adjusting the mirror case relative to a mirror holder to be mounted at the vehicle, the drive device (22 to 27) supported at the mirror holder (11) engaging at the mirror case (10) to which the mirror glass (12) is fixedly mounted, said mirror case (10) being connected with said mirror holder (11) by a joint and said drive device (22 to 27) comprising two motors (22; 23) which, at a distance from said joint, engage at the mirror case (10) through a respective gearing (25, 27),

characterized in that
said joint is a spherical joint (13, 18) and that the attack points of said two motors (22, 23) at said mirror case (10) form an isosceles triangle with said spherical joint (13, 18), the axis of symmetry (31) of said triangle being substantially horizontal or vertical.

2. The vehicle rear view mirror of claim 1, characterized in that said motors (22; 23) may be driven either in the same direction or in opposite directions for pivoting said mirror case (10) about a vertical or a horizontal axis (29, 31).

3. The vehicle rear view mirror of claim 1 or 2, characterized in that a shaft (16) fixedly connected to said mirror holder (11) extends through said spherical joint (13, 18), a holding device (21) that supports said drive device (22 to 27) being mounted at said shaft.

4. The vehicle rear view mirror of one of claims 1 to 3, characterized in that each motor (22; 23) drives a spindle (27) connected to the rear wall of said mirror case (10) through a cardanic joint (28).

**Revendications**

1. Rétroviseur de véhicule comportant un dispositif d'entraînement, logé dans le boîtier du rétroviseur, pour déplacer le boîtier de rétroviseur par rapport à un support du rétroviseur à fixer sur le véhicule, dans lequel le dispositif d'entraînement (22 à 27) appuyé sur le support (11) du rétroviseur attaque le boîtier (10) du rétroviseur sur lequel le miroir (12) est rapporté de façon fixe, et dans lequel le boîtier (10) du rétroviseur est relié, par articulation, avec le support (11) du rétroviseur et dans lequel le dispositif d'entraînement (22 à 27) présente deux moteurs qui attaquent chacun le boîtier (10) du rétroviseur par l'intermédiaire d'un mécanisme d'entraînement (25,27), à une certaine distance de l'articulation,
caractérisé par le fait que l'articulation est une articulation à rotule (13, 18) et par le fait que les points d'attaque des deux moteurs (22, 23) sur le boîtier (10) du rétroviseur forment, avec la rotule (13, 18) un triangle isocèle à axe de symétrie (31) sensiblement horizontal ou vertical.

2. Rétroviseur de véhicule selon la revendication 1, caractérisé par le fait que les moteurs (22, 23) peuvent être entraînés, au choix, dans le même sens ou en sens opposé, pour faire pivoter le boîtier (10) du rétroviseur autour d'un axe vertical ou autour d'un axe horizontal (29, 31).

3. Rétroviseur de véhicule selon la revendication 1 ou 2, caractérisé par le fait qu'à travers la rotule (13, 18), passe un fût (16) qui est rigidement relié au support (11) de rétroviseur et auquel est fixé le dispositif support (21) qui porte le dispositif d'entraînement (22 à 27).

4. Rétroviseur de véhicule selon l'une des revendications 1 à 3, caractérisé par le fait que chaque moteur (22, 23) entraîne une tige filetée (27) qui, par l'intermédiaire d'une articulation à cardan (28), est reliée à la paroi arrière du boîtier (10) du rétroviseur.

FIG.1

# FIG.2